# EUROPÄISCHE PATENTSCHRIFT

(11) **EP 0 944 561 B1**
(45) Veröffentlichungstag und Bekanntmachung des Hinweises auf die Patenterteilung: **02.05.2001**
(21) Anmeldenummer: 97949952.2
(22) Anmeldetag: 19.11.1997
(51) Int. Cl.: C05F 17/02

(54) **VORRICHTUNG ZUR DURCHARBEITUNG UND/ODER UMSETZUNG VON VORZUGSWEISE WALLARTIGEN ANHÄUFUNGEN**
DEVICE FOR WORKING THROUGH AND/OR SHIFTING PREFERABLY FILLING-TYPE ACCUMULATIONS
DISPOSITIF POUR RETOURNER ET/OU DEPLACER DES AMONCELLEMENTS DE PREFERENCE DU TYPE REMBLAI

(30) Priorität: 13.12.1996 DE 19651855
(43) Veröffentlichungstag der Anmeldung: 29.09.1999
(73) Patentinhaber: Backhus, Friedrich, 26188 Edewecht (DE)
(72) Erfinder: BACKHUS, Friedrich, D-26188 Edewecht (DE); GERDES, Stefan, D-26188 Friedrichsfehn (DE)
(74) Vertreter: Bockhorni, Josef, Dipl.-Ing.
(86) Internationale Anmeldenummer: DE9702707
(87) Internationale Veröffentlichungsnummer: WO9825867

(56) Entgegenhaltungen:
- EP-A- 0 671 374
- WO-A-95/28368

## Beschreibung

Die Erfindung betrifft eine fahrbare Vorrichtung zur Durcharbeitung und/oder Umsetzung von vorzugsweise wallartigen Anhäufungen (Mieten) von kompostierbarem oder allgemein deponierbarem Material, vorzugsweise eine selbstfahrende Vorrichtung mit in ihrer Arbeitsstellung vor den Fahrspuren vorragenden Spurräumern, die über einen Anstellwinkelbereich zur Einstellung eines zur Waagerechten oder zum Erdboden schräg ansteigenden Anstellwinkels aus einer etwa waagerechten Orientierung um eine Anstellachse aufschwenkbar sind und die um eine Schwenkachse in eine Nichtgebrauchsstellung etwa quer zu den Fahrspuren, vorzugsweise in den Zwischenraum zwischen die Fahrspuren, verschwenkbar sind.

Eine Vorrichtung der vorgenannten Gattung ist beispielsweise aus der DE-OS 44 12 637.9 bekannt.

Der Erfindung liegt die Aufgabe zugrunde, eine Vorrichtung der genannten Gattung aufzuzeigen, die robuster und kostengünstiger ist und insbesondere auch in Ländern wenigstens teilweise zu montieren, zu warten und zu reparieren ist, die nur über eine relativ einfachere Infrastruktur und Technisierung verfügen, in denen eventuell auch ungünstigere klimatischere Bedingungen vorherrschen.

Die Aufgabe wird erfindungsgemäß dadurch gelöst, daß die Vorrichtung für jeden Spurräumer eine in bezug auf die zugehörige Anstellachse positionierte Führungsbahn mittels den der Anstellwinkelbereich des Spurräumers vorgegeben ist, und ein entlang der Führungsbahn geführtes Führungselement aufweist.

Die Führungsbahn weist dabei vorzugsweise auf einem Kreisbogen um die Anstellachse herum einen Verlauf auf, der die Schwenkbewegbarkeit des Spurräumers vorgibt.

Auf diese Weise ist der Spurräumer definiert verstellbar, aber dennoch sehr robust und kompakt und wartungsarm am Vorrichtungsrahmen der Vorrichtung anordbar.

Bei der bekannten Vorrichtung fielen die Anstellachse und die Schwenkachse für den jeweiligen Spurräumer zusammen, indem die entsprechende Achse eine Schrägstellung bezüglich der Lotrechten und der Waagerechten aufwies, so daß insbesondere auch bei der Schwenkbewegung gleichzeitig eine Anstellbewegung stattfand. Bei der erfindungsgemäßen Vorrichtung werden bevorzugt voneinander getrennte, einfache Achsen als Anstellachse und als Schwenkachse verwendet oder zumindest voneinander unabhängige Schwenkbewegungen ermöglicht. Dabei weist die Anstellachse vorzugsweise eine etwa waagerechte Orientierung quer zur jeweiligen Fahrspur auf, während die Schwenkachse eine etwa lotrechte Orientierung aufweist. Die Achsen können dabei robust bolzenartig oder zapfenartig ausgebildet sein.

Die Führungsbahn ist vorzugsweise als Führungsschlitz ausgebildet, in den das Führungselement des Spurräumers eingreift und in dem es geführt ist. Insgesamt können also die entsprechenden Funktionselemente quasi als Schmiedearbeiten bzw. anderweitige einfache Metallarbeiten ausgeführt sein. Eine Wartung dieser Funktionsteile beschränkt sich weitgehend auf eine, einfache Reinigung bzw. das Auswechseln von Verschleißteilen.

Eine nächste Weiterbildung sieht vor, daß das in den Führungsschlitz eingreifende Führungselement des Spurräumers einen die Führungsschlitzränder hintergreifenden Kopf aufweist. Vorzugsweise ist dazu vorgesehen, daß im Bereich bzw. im Verlauf des Führungsschlitzes eine Durchstecköffnung für den Kopf des Führungselementes angeordnet ist und daß den Rändern des Führungsschlitzes folgend ein die Durchstecköffnung bis auf die Führungsschlitzbreite begrenzendes Verschlußteil im Bereich des Führungsschlitzes angeordnet ist. Dieses Verschlußteil ist vorzugsweise als der Gleitanlage des Kopfes dienendes, auswechselbares Verschleißteil ausgebildet. Auch bei diesen Weiterbildungen wird also eine robuste und einfache Konstruktion bevorzugt. Das Führungselement kann beispielsweise ein den Führungsschlitz durchgreifender Bolzen oder ein Flacheisen sein, wobei der am freien Ende angeordnete Kopf ein dazu quer orientierter (weiterer) Verriegelungsbolzen sein kann. Beide Bolzen oder Teile können zu einem Stück miteinander verschweißt sein. Der so ausgebildete Kopf muß nicht abnehmbar sein, da vorzugsweise ja eine Durchstecköffnung im Bereich des Führungsschlitzes vorgesehen ist, die erst nach dem Durchstecken des Kopfes mit dem Verschlußteil teilweise verschlossen wird.

Die entsprechenden Konstruktionen sind insbesondere auch raumsparend durchführbar.

Zur Verstellung bzw. Betätigung des jeweiligen Spurräumers ist vorzugsweise eine Stell- oder Betätigungseinrichtung vorgesehen. Im Rahmen einer Betätigungseinrichtung könnte beispielsweise ein doppeltwirkender Hydraulikzylinder verwendet werden. Die Stelleinrichtung könnte aber auch als einfache, bei landwirtschaftlichen Maschinen bekannte Spurstange ausgebildet sein.

Nach einer Weiterbildung ist jeder Spurräumer mittels eines Blockierelementes bezüglich der Schwenkbewegung um die Schwenkachse blockierbar. Es ist nämlich nicht immer unbedingt notwendig, daß die Spurräumer in ihre Nichtgebrauchsposition verschwenkbar sein müssen. Eine solche Schwenkbewegung kann also blockiert werden. Dies hat den Vorteil, daß mittels einer einzigen Betätigungseinrichtung bzw. Stelleinrichtung unter Zusammenwirkung mit der in Kraft oder außer Kraft gesetzten Blockiereinrichtung entweder eine Schwenkbewegung um die Schwenkachse oder eine Anstellbewegung um die Anstellachse bzw. eine kombinierte Bewegung durchgeführt werden kann. Dabei kann die Blockiereinrichtung als einfache Zugstange zur Verbindung des Spurräumers mit dem Vorrichtungsrahmen ausgebildet sein.

Es ist allerdings auch möglich, durch die Vorgabe der Wirkungslinie, also durch die Vorgabe der Befestigungs- bzw. Anlenkpunkte der Stelleinrichtung bzw. der Betätigungseinrichtung die Funktion der entsprechenden Einrichtung so vorzugeben, daß sie für eine Schwenkbewegung, eine Anstellbewegung oder eine kombinierte Bewegung vorgesehen ist.

Eine nächste Weiterbildung der Erfindung, für die auch selbständiger Schutz beansprucht wird, sieht vor, daß jeder Spurräumer als einfacher Räumschild aus wenigen Metallblechteilen gefertigt ist. Auch der Spurräumer selbst soll also besonders robust und einfach, kostengünstig und gegebenenfalls raumsparend ausbildbar sein.

Eine weitere Weiterbildung der Erfindung, für die ebenfalls selbständiger Schutz beansprucht wird, sieht vor, daß die Vorrichtung wenigstens teilweise aus Bauelementen eines Bauelementensatzes aufgebaut ist, bei denen zur vorzugsweise etwa rechtwinkligen Verbindung eines Bauelementes mit einem anderen Bauelement das eine Bauelement wenigstens einen Schlitz und das andere Bauelement eine in den Schlitz einführbare Verbindungszunge aufweist.

Aufgrund dieser Zungen-Schlitz-Stoßverbindungen ist eine exakte, insbesondere exakt vorgebbare Montage auch mit einfachen Mitteln möglich. Insbesondere könnte eine erfindungsgemäße Vorrichtung bauelementenweise bzw. zerlegt auch in Länder mit schlechterer Infrastruktur ausgeliefert und dort montiert bzw. später auch einmal in einfacher Weise repariert werden. Die Erfindung sieht vorzugsweise vor, daß die Verbindungszunge im Schlitz verschweißt ist. Dabei wird die Verbindungszunge bevorzugt kürzer ausgebildet als der Schlitz aufgrund der Materialstärke des zugehörigen Bauelementes tief ist, und zwar derart, daß eine Resttiefe des Schlitzes bei in ihm eingeführter Verbindungszunge verbleibt, die von der dem die Verbindungszunge aufweisenden Bauelement abgewandten Rückseite des Schlitzes für eine Schweißarbeit frei zugänglich ist. Die notwendige Schweißarbeit kann also dadurch in sehr einfacher Weise durchgeführt werden, und zwar bevorzugt ohne Risiko bzw. mit nur minimalem Risiko, daß bei der entsprechenden Schweißarbeit die Paßgenauigkeit bzw. Winkelgenauigkeit verlorengeht, weil bei der so vorgesehenen Schweißarbeit nicht die Gefahr besteht, daß sich durch die Schweißarbeit selbst die zu verbindenden Bauteile verformen. Bei der Schweißarbeit kann die Resttiefe des Schlitzes mit Schweißmaterial teilweise ausgefüllt werden.

Es ist also erfindungsgemäß vorzugsweise nicht nur vorgesehen, die Spurräumer einfach und robust so auszubilden, daß sie auch einfach und bewegungsgenau und wartungsarm montierbar und wieder abnehmbar sind, sondern auch der Vorrichtungsrahmen selbst ist aufgrund des Bauelementensystems und der besonderen ZungenSchlitz-Verbindbarkeit in einfacher Weise quasi überall montierbar.

Ausführungsbeispiele, aus denen sich weitere erfinderische Merkmale ergeben, sind in der Zeichnung schematisch dargestellt. Es zeigen:
- Fig. 1: den in Fahrtrichtung weisenden Frontbereich einer erfindungsgemäßen Vorrichtung mit einem Spurräumer in der Seitenansicht,
- Fig. 2: den Vorrichtungsabschnitt gemäß Fig. 1, jedoch bei geändert angelenkter Betätigungseinrichtung für den Spurräumer,
- Fig. 3: einen Spurräumerbereich gemäß den Fig. 1 und 2 in der Draufsicht,
- Fig. 4: einen Bereich wie in Fig. 3 in der Vorderansicht mit dem Spurräumer in Arbeitsstellung,
- Fig. 5: den Bereich gemäß Fig. 4 in der Vorderansicht mit dem Spurräumer in Nichtgebrauchsstellung,
- Fig. 6: den Bereich des Führungsschlitzes für einen Spurräumer in einer Detailvergröße rung,
- Fig. 7: eine Seitenwand eines Vorrichtungsrahmens einer erfindungsgemäßen Vorrichtung mit einer Schlitzöffnung für eine ZungenSchlitz-Verbindung,
- Fig. 8: einen Längsschnitt durch eine Zungen-Schlitz-Verbindung entlang der in Fig. 7 mit VIII-VIII bezeichneten Linie,
- Fig. 9: einen Querschnitt durch eine Zungen-Schlitz-Verbindung entlang der in Fig. 7 mit IX-IX bezeichneten Linie und
- Fig. 10 bis 12: eine Seitenansicht, eine Draufsicht und eine Vorderansicht eines als Räumschild ausgebildeten Spurräumers.

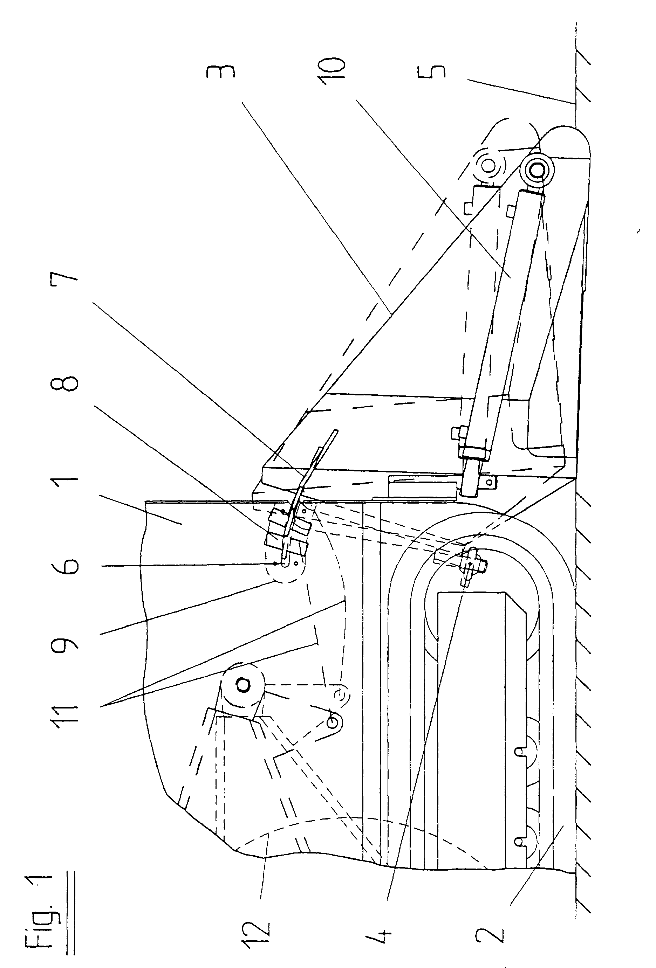

Fig. 1 zeigt in der Seitenansicht den vorderen, in Fahrtrichtung weisenden Bereich einer erfindungsgemäßen Vorrichtung.

Die dargestellte Vorrichtung weist einen Vorrichtungsrahmen 1 auf, der auf einem Fahrwerk selbstfahrend auf zwei Fahrspuren verfahrbar ist, und zwar verfügt das Fahrwerk pro Fahrspur über eine Fahrkette 2. Der jeweiligen Fahrspur der Fahrkette 2 ist ein an dem Vorrichtungsrahmen 1 verstellbar angeordneter Spurräumer 3 vorgeordnet, der in Gebrauchsstellung bzw. Arbeitsstellung in Fahrtrichtung weist und in einer Nichtgebrauchsstellung in einer Querrichtung zwischen die Fahrspuren eingeschwenkt ist.

Der als einfacher Räumschild ausgebildete Spurräumer 3 ist zu seiner Verstellbarkeit an einer etwa waagerecht und quer zur Fahrspur verlaufenden Anstellachse 4 angelenkt und um diese verschwenkbar, wie mit gestrichelten Linien in der Fig. 1 angedeutet ist. Er ist nämlich aus einer etwa waagerechten Position in die mit gestrichelten Linien dargestellte Position verschwenkbar, bei der sein freies Ende angehoben ist und er insgesamt zu seinem freien Ende hin schräg ansteigend in einem Anstellwinkel zum Erdboden 5 bzw. zur Waagerechten gestellt ist. Der Anstellwinkelbereich wird durch einen Führungsschlitz 6 in einem Bauteil des Vorrichtungsrahmens 1 vorgegeben, der auf einem Kreisbogen, der dem Anstellwinkel entspricht, um die Anstellachse 4 verläuft. Der Spurräumer 3 weist ein Führungselement 7 auf, das geführt in den Führungsschlitz 6 eingreift und an seinem freien Ende einen Kopf 8 aufweist, der die Ränder des Führungsschlitzes 6 hintergreift. Den Rändern des Führungsschlitzes 6 folgend ist ein Verschlußteil 9 im Bereich des Führungsschlitzes 6 angeordnet, das als Verschleißteil ausgebildet ist und zur Gleitanlage für den Kopf 8 des Führungselementes 7 dient.

Der Spurräumer kann mit Hilfe eines doppeltwirkenden Hydraulikzylinders 10 bewegt werden. Dieser Hydraulikzylinder 10 könnte aber auch bei einer einfachen Bauversion durch eine Spurstange als Stelleinrichtung für den Spurräumer 3 ersetzt sein.

In dem in Fig. 1 dargestellten Beispiel dient allerdings der Hydraulikzylinder aufgrund seiner Wirkungslinie nur dazu, den Spurräumer 3 von der dargestellten Gebrauchsstellung in die quer dazu orientierte Nichtgebrauchsstellung zwischen die Fahrspuren zu verschwenken, und zwar um eine in Fig. 1 nicht näher erkennbare, im wesentlichen lotrecht verlaufende Schwenkachse.

Zur Anhebung, das heißt zur Verschwenkung des Spurräumers 3 um die Anstellachse 4 dient in dem in Fig. 1 dargestellten Beispiel ein einfacher Seilzug 11, der in zwei Positionen dargestellt ist.

Zum Umsetzen wallartiger Anhäufungen von Material weist die erfindungsgemäße Vorrichtung in an sich bekannter Weise ein rotierend antreibbares Arbeitsorgan 12 auf, das zwischen den Fahrspuren im wesentlichen als horizontal orientierte Trommel verläuft. Dieses Arbeitsorgan 12 ist, wie aus dem Stand der Technik bekannt, vorzugsweise anhebbar und absenkbar. Mit dieser Hubbewegung des Arbeitsorganes kann auch die Anstellbewegung des Spurräumers 3 um die Anstellachse 4 über den Seilzug 11 gekoppelt sein. Sowohl die Anhebung des Arbeitsorganes 12 als auch die Anhebung des Spurräumers 3 um die Anstellachse 4 geschieht nämlich beim Verfahren der Vorrichtung in erster Linie dann, wenn irgendwelche Hindernisse, wie zum Beispiel Steine, überfahren werden sollen, ohne daß das Arbeitsorgan 12 oder der Spurräumer 3 dabei beschädigt werden sollen.

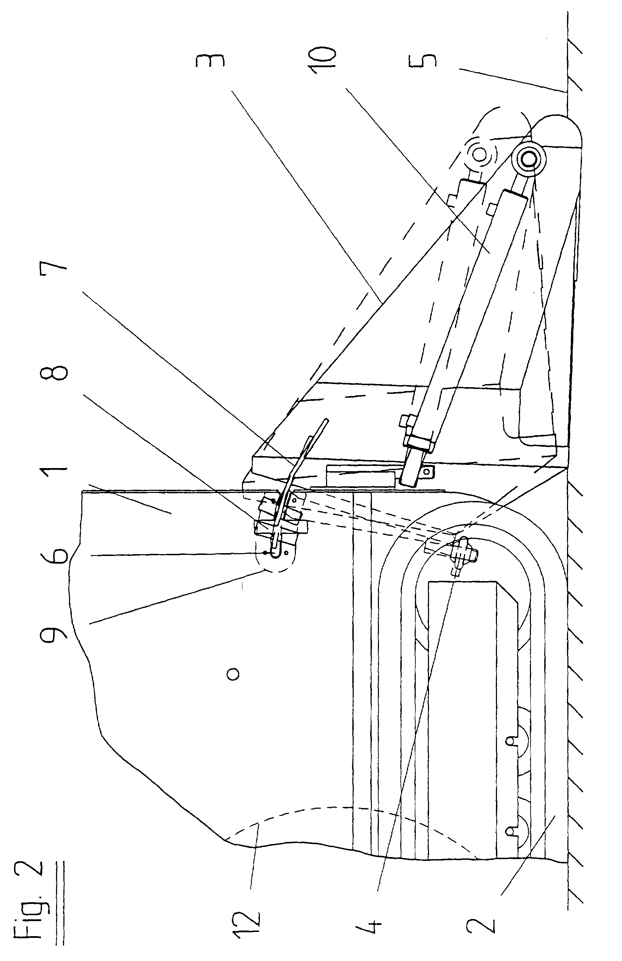

Fig. 2 zeigt im wesentlichen den gleichen Bereich einer erfindungsgemäßen Vorrichtung wie Fig. 1, ebenfalls in der Seitenansicht.

Gleiche Bauelemente sind mit den gleichen Bezugszahlen bezeichnet, wie in Fig. 1.

Diesmal ist allerdings der Hydraulikzylinder 10 am Vorrichtungsrahmen höher angelenkt, so daß mit Hilfe des Hydraulikzylinders 10 sowohl eine Schwenkbewegung des Spurräumers 3 um die Schwenkachse als auch eine Anstellbewegung um die Anstellachse 4 durchführbar ist. Ein Seilzug 11 kann daher entfallen.

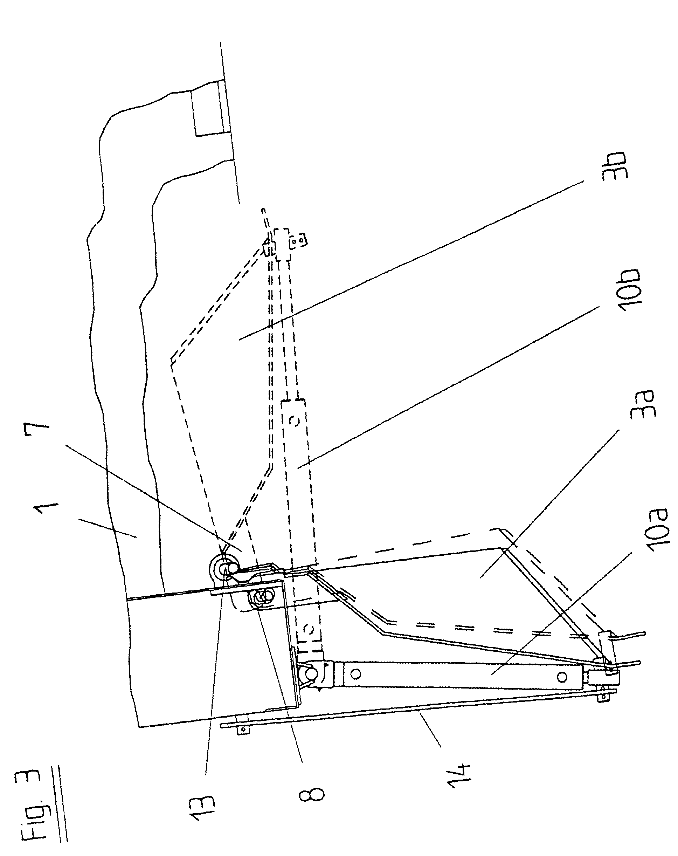

Fig. 3 zeigt den Bereich eines Spurräumers 3 gemäß den Fig. 1 und 2 in einer Draufsicht. Gleiche Bauelemente sind wieder mit den gleichen Bezugszahlen bezeichnet wie in den vorhergehenden Figuren.

Der Spurräumer ist in der Darstellung der Fig. 3 zweimal dargestellt, und zwar einmal mit der Bezugszahl 3a in Arbeitsstellung, bei der er in Fahrtrichtung der Vorrichtung weist und einmal mit der Bezugszahl 3b in Nichtgebrauchsstellung, in der er einwärts in den Zwischenraum zwischen den Fahrspuren und quer zu diesen geschwenkt ist. Eine Verschwenkung ist dabei um die Schwenkachse 13 erfolgt. Außerdem ist im Bereich der Arbeitsstellung 3a der Spurräumer 3 auch noch einmal mit gestrichelten Linien in einer um die Anstellachse 4 angehobenen und leicht verschwenkten Stellung angedeutet.

Die Bewegung des Spurräumers 3 erfolgt durch Aus- und Einfahren des Arbeitszylinders 10, der ebenfalls in der Fig. 3 zweifach mit den Bezugszahlen 10a und 10b dargestellt ist.

Soll eine Schwenkbewegung des Spurräumers durch Betätigung des Hydraulikzylinders 10 in die Nichtgebrauchsstellung 3b verhindert werden, so kann eine solche Schwenkbewegung um die Schwenkachse 13 in einfacher und robuster Weise dadurch blockiert werden, daß das freie Ende des Spurräumers 3 über eine Zugstange 14 mit dem Vorrichtungsrahmen 1 insoweit starr verbunden wird. Durch Betätigung des Hydraulikzylinders 10 ist dann also nur noch eine Anstellbewegung um die Anstellachse 4 möglich.

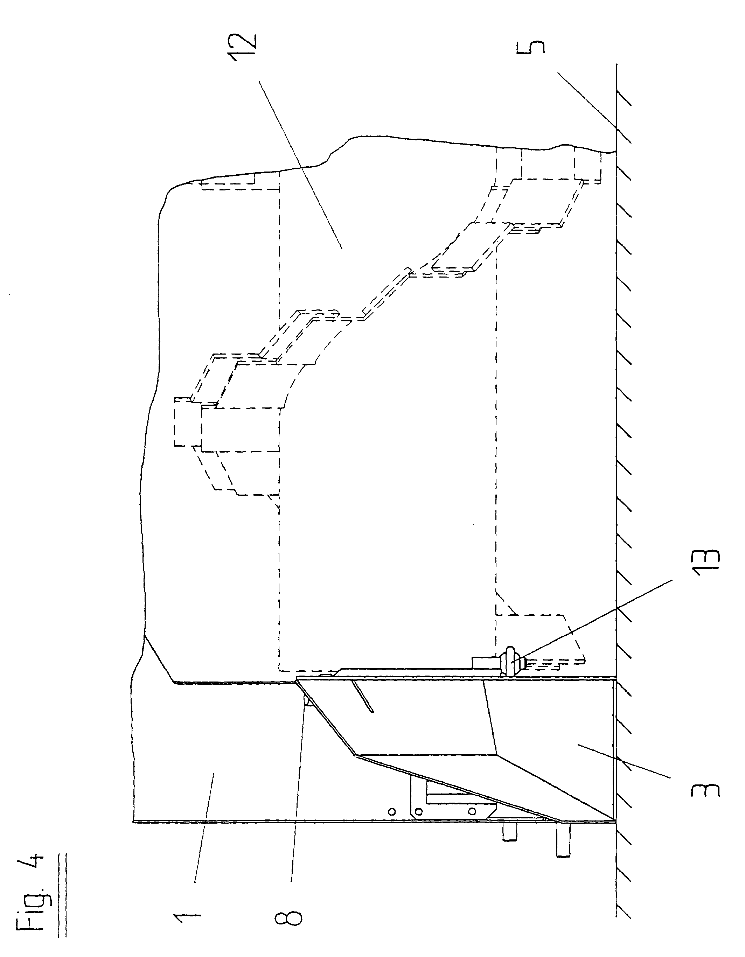

Fig. 4 zeigt die erfindungsgemäße Vorrichtung teilweise in einer Vorderansicht. Gleiche Bauelemente sind wieder mit den gleichen Bezugszahlen bezeichnet wie in den vorhergehenden Figuren.

In der Fig. 4 ist insbesondere das Arbeitsorgan 12 etwas genauer zwischen den Fahrspuren angedeutet. Der Spurräumer 3 befindet sich in Arbeitsstellung.

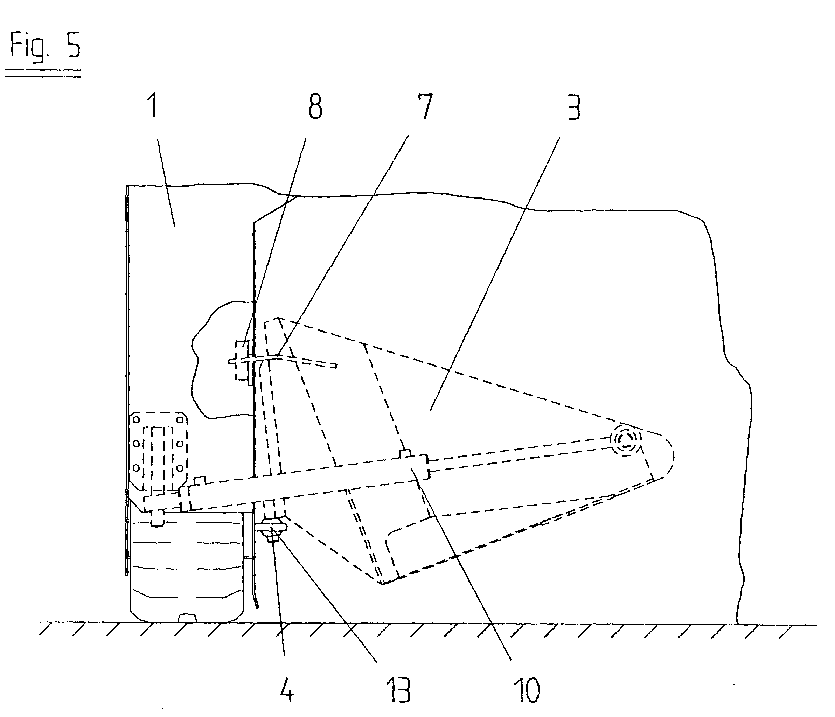

Fig. 5 zeigt einen ähnlichen Bereich ebenfalls in der Vorderansicht, diesmal unter Fortlassung des Arbeitsorganes 12.

In der Fig. 5 befindet sich der Spurräumer 3 in der eingeschwenkten Nichtgebrauchsstellung. Wie in der Fig. 5 erkennbar ist, ist der Spurräumer dabei auch gleichzeitig um die Anstellachse 4 angestellt.

Aus dieser Fig. 5 wird am deutlichsten erkennbar, daß bei der Schwenkachse 13 und der Anstellachse 4 im Prinzip von getrennten Achsen gesprochen werden kann, jedenfalls von zueinander etwa orthogonalen Achswirklinien. In der Praxis können allerdings die beiden Achsen 4 und 13 gemeinsam bzw. als Baueinheit ausgebildet sein, beispielsweise in Form einer Art Kugelgelenk.

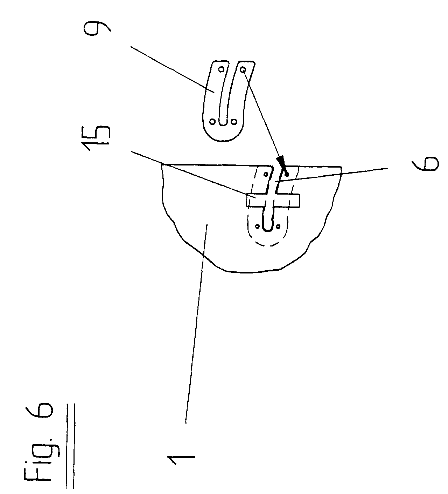

Fig. 6 zeigt in einer Detailvergrößerung und teilweisen Explosionsdarstellung den Bereich eines Führungsschlitzes 6, in dessen Bereich ein Verschlußteil 9 anordbar ist. Der Führungsschlitz 6 weist für den Kopf 8 des Führungselementes 7 des Spurräumers 3 eine Durchstecköffnung 15 auf, die dann wieder nach Durchstecken des Kopfes 8 auf die Schlitzbreite des Führungsschlitzes 6 begrenzt ist, wenn das Verschlußteil 9, das als Verschleißteil und Gleitanlage für den Kopf 8 ausgebildet ist, am Vorrichtungsrahmen 1 montiert ist.

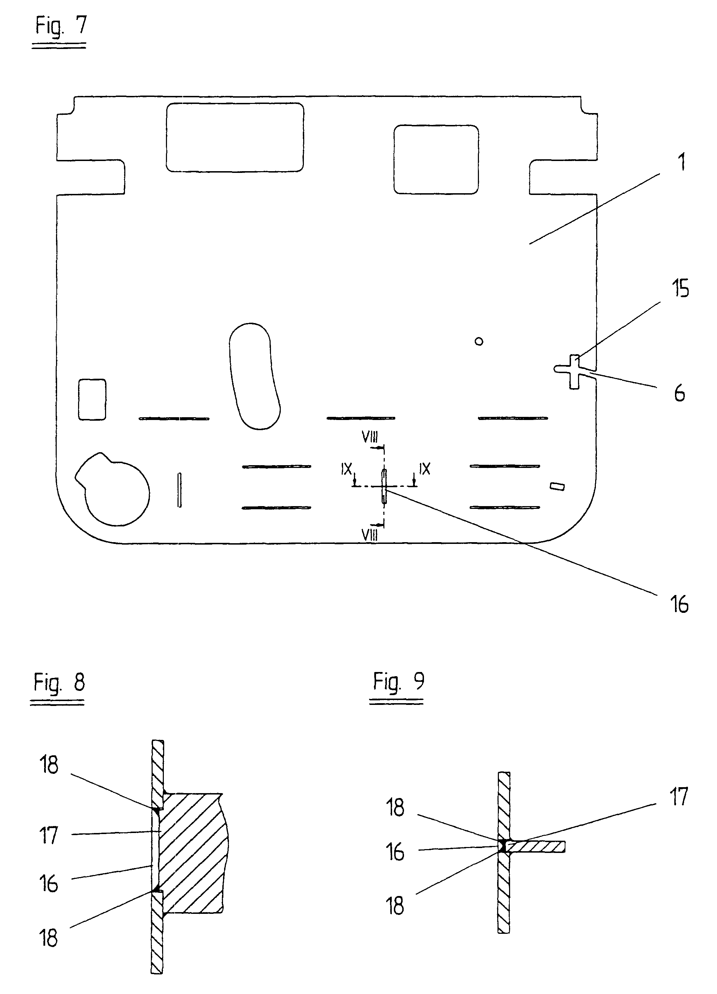

Die Fig. 7 zeigt ein Bauteil, nämlich ein Seitenteil, des Vorrichtungsrahmens 1. Erkennbar ist der Führungsschlitz 6 mit der Durchstecköffnung 15.

Besonders hervorzuheben ist in der Fig. 7 jedoch eine Schlitzöffnung 16, deren Funktion anhand der Fig. 8 und 9 deutlich wird.

Einzelne Bauteile des Vorrichtungsrahmens sind nämlich nach Art eines Bauelementensystemes in der Weise vorgefertigt, daß sie zum Teil Schlitzöffnungen 16 und zum Teil Verbindungszungen 17 aufweisen, wobei diese Verbindungszungen 17 mehr oder weniger paßgenau in die Schlitzöffnungen 16 eingeführt werden können, allerdings nur so kurz ausgebildet sind, daß sie die Schlitzöffnungen 16 nicht durchragen, sondern eine Resttiefe der Schlitzöffnung 16 verbleibt. Von der der Verbindungszunge 17 abgewandten Seite ist damit die Schlitzöffnung 16 noch frei zugänglich und offen, so daß in diese Schlitzöffnung 16 hinein Schweißverbindungen 18 angebracht werden können, ohne daß sich die zu verbindenden Teile dabei verziehen bzw. verformen.

Fig. 8 zeigt einen Längsschnitt durch eine solche Verbindung entlang der in Fig. 7 mit VIII-VIII bezeichneten Linie.

Fig. 9 zeigt einen Querschnitt entlang der in Fig. 7 mit IX-IX bezeichneten Linie.

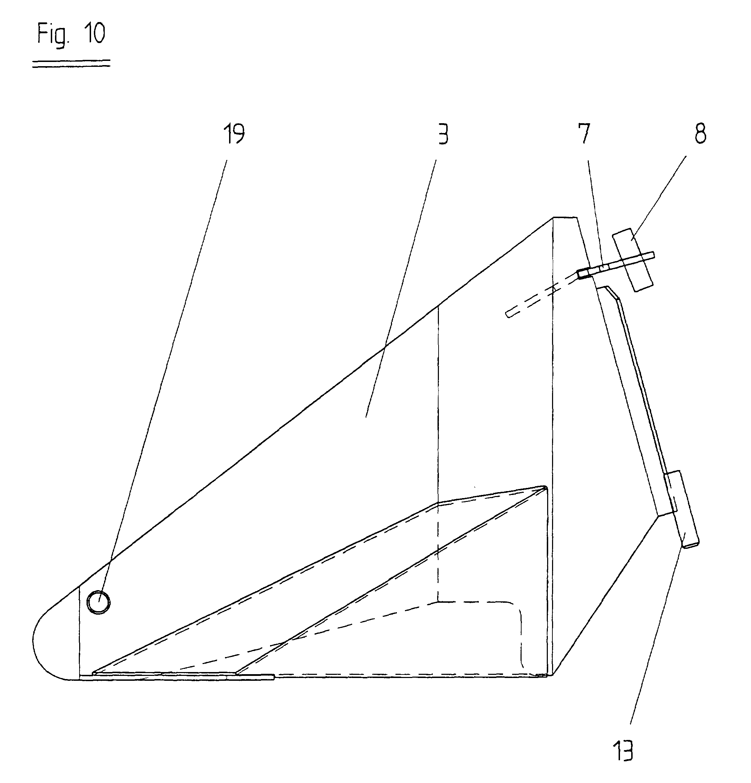

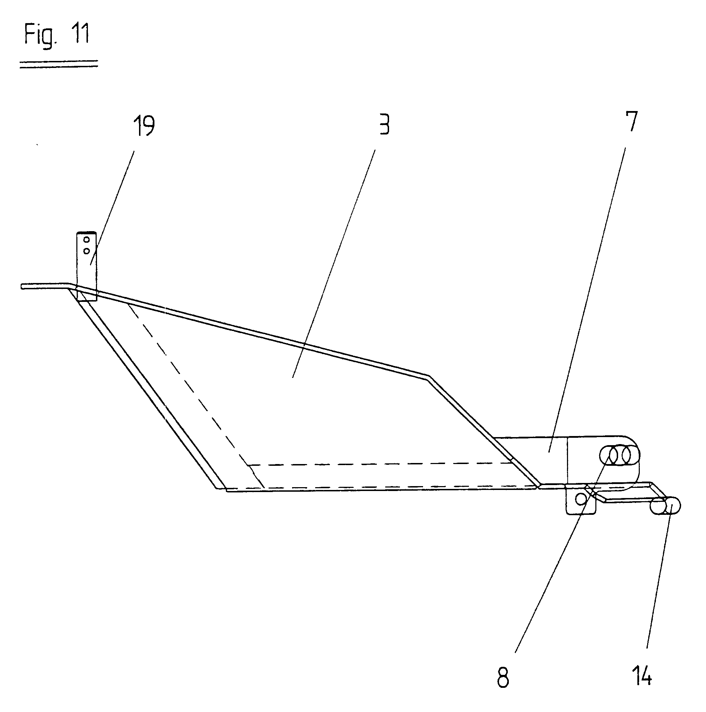

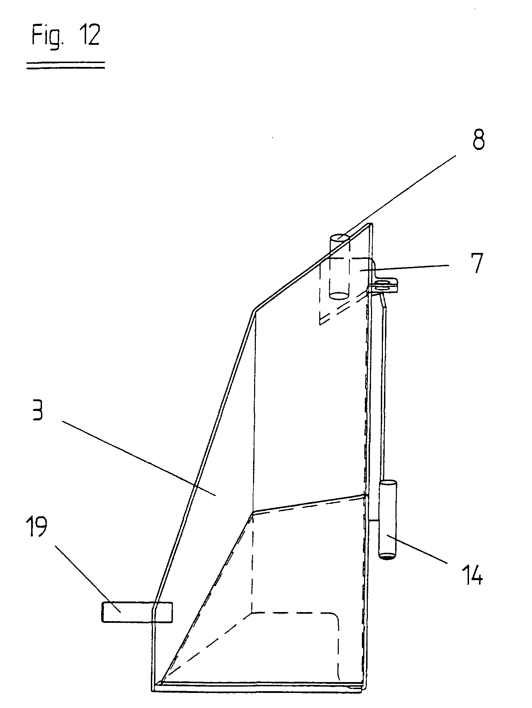

Die Fig. 10 bis 12 zeigen einmal in einer Seitenansicht, einmal in einer Draufsicht und einmal in einer Vorderansicht den als einfachen Räumschild ausgebildeten Spurräumer 3. Gleiche Bauelemente sind mit den gleichen Bezugszahlen bezeichnet wie in den vorhergehenden Figuren.

Letztlich soll in diesen. drei Figuren nur gezeigt werden, wie einfach ein solcher Räumschild aus wenigen Metallteilen dennoch sehr funktonell ausgebildet werden kann. Gleichzeitig ist auch die Anordnung und Orientierung des Führungselementes 7 und seines Kopfes 8 erkennbar, wobei der Kopf 8 im dargestellten Beispiel eine Art Querbolzen durch ein laschenförmiges Führungselement 7 ist. Außerdem ist ein Achszapfen als Schwenkachse 13 gezeigt. Ein weiterer Zapfen 19 kann zur Befestigung einer Zugstange 14 dienen.

## Patentansprüche

1. Fahrbare Vorrichtung zur Durcharbeitung und/oder Umsetzung von Anhäufungen von kompostierbarem oder allgemein deponierbarem Material,
mit in ihrer Arbeitsstellung vor den Fahrspuren vorragenden Spurräumern, die über einen Anstellwinkelbereich zur Einstellung eines zur waagerechten oder zum Erdboden schräg ansteigenden Anstellwinkels aus einer etwa waagerechten Orientierung um eine Anstellachse aufschwenkbar sind und die um eine Schwenkachse in eine Nichtgebrauchsstellung etwa quer zu den Fahrspuren verschwenbar sind,
**dadurch gekennzeichnet,**
daß sie für jeden Spurräumer (3) eine in bezug auf die zugehörige Anstellachse (4) positionierte Führungsbahn, mittels der der Anstellwinkelbereich des Spurräumers (3) vorgegeben ist, und ein entlang der Führungsbahn geführtes Führungselement (7) aufweist.

2. Vorrichtung nach Anspruch 1, dadurch gekennzeichnet, daß die Führungsbahn als im Vorrichtungsrahmen (1) angeordneter Führungsschlitz (6) ausgebildet ist.

3. Vorrichtung nach Anspruch 2, dadurch gekennzeichnet, daß das in den Führungsschlitz (6) eingreifende Führungselement (7) des Spurräumers (3) einen die Führungsschlitzränder hintergreifenden Kopf (8) aufweist.

4. Vorrichtung nach Anspruch 3, dadurch gekennzeichnet, daß im Bereich bzw. im Verlauf des Führungsschlitzes (6) eine Durchstecköffnung (15) für den Kopf (8) des Führungselementes (7) angeordnet ist und daß ein den Rändern des Führungsschlitzes (6) folgendes, die Durchstecköffnung (15) bis auf die Führungsschlitzbreite begrenzendes verschlußteil (9) im Bereich des Führungsschlitzes (6) angeordnet ist.

5. Vorrichtung nach Anspruch 4, dadurch gekennzeichnet, daß das Verschlußteil (9) als der Gleitanlage des Kopfes (8) des Führungselementes (7) dienendes Verschleißteil ausgebildet ist.

6. Vorrichtung nach einem oder mehreren der vorhergehenden Ansprüche, dadurch gekennzeichnet, daß jedem Spurräumer (3) eine Stell- oder Betätigungseinrichtung zugeordnet ist.

7. Vorrichtung nach Anspruch 6, dadurch gekennzeichnet, daß jeder Spurräumer (3) mittels eines Blockierelementes bezüglich der Schwenkbewegung um die Schwenkachse (13) blockierbar ist.

8. Vorrichtung nach Anspruch 7, dadurch gekennzeichnet, daß die Blockiereinrichtung als Zugstange (14) zur Verbindung des Spurräumers (3) mit dem Vorrichtungsrahmen (1) ausgebildet ist.

9. Vorrichtung nach einem oder mehreren der vorhergehenden Ansprüche, dadurch gekennzeichnet, daß jeder Spurräumer (3) als einfacher Räumschild aus wenigen Metallblechteilen gefertigt ist.

10. Vorrichtung nach Anspruch 1, dadurch gekennzeichnet, daß der Vorrichtungsrahmen aus Bauelementen aufgebaut ist, deren rechtwinklige Verbindung durch wenigstens einen Schlitz (16) an dem einen und wenigstens einer Verbindungszunge (17) an dem anderen Bauelement hergestellt wird.

11. Vorrichtung nach Anspruch 10, dadurch gekennzeichnet, daß die Verbindungszunge (17) im Schlitz (16) verschweißt ist.

12. Vorrichtung nach Anspruch 11, dadurch gekennzeichnet, daß die Verbindungszunge (17) kürzer ausgebildet ist als der Schlitz (16) aufgrund der Materialstärke des zugehörigen Bauelementes tief ist, derart, daß eine Resttiefe des Schlitzes (16) bei in ihn eingeführter Verbindungszunge (17) verbleibt, die von der dem die Verbindungszunge (17) aufweisenden Bauelement abgewandten Rückseite des Schlitzes (16) für eine Schweißarbeit frei zugänglich ist.

## Claims

1. Movable device for working through and/or shifting piles of compostable material or general dumping material including track clearers, which project in their working position in front of the drive tracks and may be pivoted up out of an approximately horizontal orientation over a range of setting angles to adopt a setting angle rising obliquely with respect to the horizontal or to the ground and which may be pivoted about a pivotal axis approximately transverse to the drive tracks into an inoperative position, characterised in that for each track clearer (3) it has a guideway positioned with respect to the associated adjustment axis (4), by means of which the setting angle range of the track clearer (3) is predetermined, and a guide element (7) guided along the guideway.

2. Device as claimed in Claim 1, characterised in that the guideway is constructed in the form of a guide slot (6) arranged in the device frame (1).

3. Device as claimed in Claim 2, characterised in that the guide element (7) of the track clearer (3) engaging in the guide slot (6) has a head (8) engaging behind the edges of the guide slot.

4. Device as claimed in Claim 3, characterised in that an insertion opening (15) for the head (8) of the guide element (7) is arranged in the vicinity of or in the course of the guide slot (6) and that a closure member (9), which follows the edges of the guide slot (6) and borders the insertion opening (15) except for the width of the guide slot, is arranged in the vicinity of the guide slot (6).

5. Device as claimed in Claim 4, characterised in that the closure member (9) is constructed as a wear member acting as the sliding abutment for the head (8) of the guide element (7).

6. Device as claimed in one or more of the preceding claims, characterised in that an adjustment or actuating device is associated with each track clearer (3).

7. Device as claimed in Claim 6, characterised in that each track clearer (3) may be disabled with respect to pivotal movement about the pivotal axis (13) by means of a blocking element.

8. Device as claimed in Claim 7, characterised in that the blocking device is constructed as pull rod (14) for connecting the track clearer (3) to the device frame (1).

9. Device as claimed in one or more of the preceding claims, characterised in that each track clearer (3) is fabricated as a simple clearing shell from a few metallic sheet components.

10. Device as claimed in Claim 1, characterised in that the device frame is constructed of elements whose right angled connection is produced by means of at least one slot (16) on the one element and at least one connecting tongue (17) on the other element.

11. Device as claimed in Claim 10, characterised in that the connecting tongue (17) is welded in the slot (16).

12. Device as claimed in Claim 11, characterised in that the connecting tongue (17) is shorter than the slot (16) is deep by reason of the material thickness of the associated element such that a residual depth of the slot (16) remains when the connecting tongue (17) is introduced into it, which is freely accessible for welding work from the rear side of the slot (16) remote from the element affording the connecting tongue (17).

## Revendications

1. Dispositif mobile pour retourner et/ou déplacer des amoncellements de matériau pouvant être composté ou déposé en tant que remblai, comprenant des déblayeurs de voies se déployant en position de travail devant les voies de circulation, qui peuvent être déplacés autour d'un axe d'inclinaison à partir d'une orientation approximativement horizontale sur une zone d'angle d'attaque pour obtenir un angle d'attaque disposé en pente oblique montante par rapport à l'horizontale ou au sol et qui peuvent être repliés autour d'un axe de pivotement dans une position de non-utilisation située à peu près transversalement par rapport aux voies de circulation, caractérisé en ce que qu'il comprend pour chaque déblayeur de voie (3) une piste de guidage positionnée par rapport à l'axe d'inclinaison correspondant (4), au moyen de laquelle est déterminée la zone de l'angle d'inclinaison du déblayeur de voie (3), ainsi qu'un élément de guidage orienté le long de la piste de guidage (7).

2. Dispositif selon la revendication 1, caractérisé en ce que la piste de guidage est conçue comme fente de guidage (6) disposée à l'intérieur du cadre du dispositif (1).

3. Dispositif selon la revendication 2, caractérisé en ce que l'élément de guidage (7) du déblayeur de voie (3) pénétrant dans la fente de guidage (6) est muni d'une tête (8) se trouvant derrière les bords de la fente de guidage.

4. Dispositif selon la revendication 3, caractérisé en ce que dans la zone ou dans le cheminement de la fente de guidage (6) est disposée une ouverture de passage (15) pour la tête (8) de l'élément de guidage (7) et en ce qu'à la suite des bords de la fente de guidage (6), dans la zone de la fente de guidage (6), est disposé un embout d'arrêt (9) limitant l'ouverture de passage (15) jusqu'à la valeur de la largeur de la fente de guidage.

5. Dispositif selon la revendication 4, caractérisé en ce que l'embout d'arrêt (9) est conçu comme pièce servant d'élément anti-usure pour le dispositif de glissement de la tête (8) de l'élément de guidage (7).

6. Dispositif selon l'une ou plusieurs des revendications précédentes, caractérisé en ce qu'à chaque déblayeur de voie (3) est attribué un dispositif d'inclinaison ou d'actionnement.

7. Dispositif selon la revendication 6, caractérisé en ce que le mouvement de pivotement de chaque déblayeur de voie (3) autour de l'axe de pivotement (13) peut être bloqué au moyen d'un élément de blocage.

8. Dispositif selon la revendication 7, caractérisé en ce que le dispositif de blocage est conçu comme tige de traction (14) pour assurer la liaison du déblayeur de voie (3) avec le cadre du dispositif (1).

9. Dispositif selon l'une ou plusieurs des revendications précédentes, caractérisé en ce que chaque déblayeur de voie (3) est fabriqué comme simple bouclier de déblayage avec peu de pièces en tôles métalliques.

10. Dispositif selon la revendication 1, caractérisé en ce que le cadre du dispositif est réalisé avec des composants dont la liaison à angles droits a lieu par au moins une fente (16) sur l'un des composants et au moins une languette de liaison (17) sur l'autre composant.

11. Dispositif selon la revendication 10, caractérisé en ce que la languette de liaison (17) est soudée dans la fente (16).

12. Dispositif selon la revendication 11, caractérisé en ce que la languette de liaison (17) est plus courte que la profondeur de la fente (16) résultant de l'épaisseur du matériau constitutif du composant correspondant, ceci occasionnant une profondeur résiduelle de la fente (16) lorsque la languette de liaison (17) y est introduite, qui est librement accessible pour des travaux de soudure par le côté arrière de la fente (16) opposé au composant comprenant la languette de liaison (17).
